# EUROPEAN PATENT SPECIFICATION

(11) **EP 0 856 132 B1**
(45) Date of publication and mention of the grant of the patent: **17.04.2002**
(21) Application number: 96934834.1
(22) Date of filing: 16.10.1996
(51) Int. Cl.: F24D 11/02, F25B 29/00, F25B 15/06, F24F 5/00

(54) **METHOD AND ARRANGEMENT FOR PRODUCING COOLING AND HEATING POWER**
VERFAHREN UND VORRICHTUNG ZUR ERZEUGUNG VON KÄLTE UND WÄRME
PROCEDE ET DISPOSITIF DE PRODUCTION D'ENERGIE DE REFROIDISSEMENT ET DE CHAUFFAGE

(30) Priority: 17.10.1995 FI 954950
(43) Date of publication of application: 05.08.1998
(73) Proprietor: ABB Oy, 00380 Helsinki (FI)
(72) Inventor: LESKINEN, Seppo, FIN-01120 Västerskog (FI)
(74) Representative: Valkeiskangas, Tapio Lassi Paavali
(86) International application number: FI9600545
(87) International publication number: WO9714918

(56) References cited:
- WO-A-95/20133
- DE-A- 2 846 728
- DE-A- 3 103 955
- US-A- 4 134 273
- US-A- 4 143 705

## Description

The invention relates to a method for producing cooling and heating power for one or more buildings and for distributing the power to the buildings by means of liquid circulating in a pipe system, the cooling and heating power being produced by hot district heating water and by an absorption aggregate or another aggregate producing cooling power that obtains energy from the district heating water. The invention also relates to an arrangement for producing cooling and heating power for one or more buildings.

Today buildings are generally cooled by a cooling aggregate based on a compressor aggregate, the cooling aggregates being dispersed to places of use. Cooling power is produced in them by electricity. The proportion of cooling of buildings in the consumption of electricity is now fairly important, e.g., in the Southern European countries the electricity consumption peaks in the summer. With regard to production, the consumption also occurs at an unfavourable time. The heat inevitably generated in connection with production of electricity cannot be used for much else than production of hot tap water, and so it has to be condensed and supplied to waterways e.g. by brine condensers or to air by cooling towers.

Cooling power could also be produced by waste heat produced in the production of electricity in so-called absorption aggregates, the best known of which are lithiumbromide/water and ammonia/water aggregates. The consumption of electricity and thus e.g. emissions of CO₂ could be reduced with these aggregates, and the waste heat, which is now completely wasted, could be utilized.

The preferred way of generating chill is a so-called district cooling system, in which cooling power is generated concentratedly in power plants and supplied to users via a pipe system in the same way as district heat. This has an advantageous effect e.g. on servicing costs, which in the present, dispersed systems are high, and on reliability, on levelling down of random load peaks, etc.

District cooling systems have not become common, however, due to high investment costs. Although the kWh price of the chill generated in this way is low as compared with the price of electricity, the number of hours of use is so small in those climatic zones where district heating systems are worth building that the investment costs will not be covered. In Finland, for example, such systems have thus not been built. The majority of them exist in Japan, Korea and the U.S.A.

US-A-4 134 273 describes a system in which a hot tank is used for storing heat and a cold tank is used for storing cold. This system is however of a complicated and expensive design, and therefore said system is practically useless for solving the problems described above.

Finnish Patent Application 940,342 teaches a 3-pipe system, by which the costs of the distribution system can be reduced significantly. In addition, Finnish Patent Application 940,343 teaches a system in which the operations of the heat exchangers are combined, which makes it possible to significantly reduce the investment costs in individual buildings. Further, Finnish Patent Application 940,344 teaches a system in which the return water of the district heating/cooling system is used as condensation water, which is needed by the absorption aggregate, whereby no cooling tower or other condenser is needed in the power plant. This reduces the investment costs and the costs of use in the production of district chill.

The above measures make district cooling systems worth building in new communities where all buildings that require cooling are connected to the system. The proportion of such building, however, is small in industrialized countries, and its proportion in all building is growing smaller. Most building now comprises extension or renovation of existing communities. It is then not possible to connect a significant number of buildings simultaneously to a district cooling system when a system is built in the area. A small number of buildings connected is not sufficient to cover the investment costs of a district cooling system and of generation of district chill, which prevents building of district cooling systems in existing communities.

A similar problem has been encountered when district heating systems have been built. The problem has been solved by movable heating stations in which heat is produced only for a limited area, whereby the costs of a distribution system have remained small and can have been covered immediately. When a sufficient number of areas has been connected, a main network is built, and the areas are connected to the power plant via the network. The movable heating stations are shifted to new areas or maintained in the area as heating stations that are used during maximum heat demand. The idea cannot be applied to building of a district cooling system without difficulty. It is true that the costs of building a main network are eliminated, but the use of return water as condensation water is here not possible. Because of this, cooling towers, ground water, etc. should be used. For example, it is often impossible to place cooling towers in urban areas for architectural reasons, lack of space, etc.

Some plants of the above type based on absorption aggregates have been built, and technically such systems work well, but their competitiveness with compressor cooling is questionable, and the smaller the number of hours of use (i.e. in mild and cold climatic zones, where district heating systems are common), the less competitive they are. The reason for this is that the investment costs of an absorption heat pump, a cooling tower and a distribution system are much higher than the costs of a corresponding compressor aggregate. Even when the energy, i.e. heat, is almost free and the electricity used by the compressor aggregate is expensive, a reduction in the costs of use is not sufficient to cover the difference in the investment costs if the number of hours of use is not sufficiently great. The situation is made worse by a strong, short-term load peak in the cooling demand, the peak being more than double the average load during a cooling period. This is due to the fact that in the mild and cold zone, the design outdoor temperature prevails only in the afternoon on a few days a year. The average cooling load is also short-term. Cooling, unlike heating, is not needed round-the-clock but only at midday and in the afternoon. Since the consumption of electricity in the countries situated in the cold and mild zones peaks in the winter, high investment costs cannot be substantiated by a reduction in the investments on electricity production machinery, like in the countries situated in the hot zone. Only a few such plants have thus been built in Middle and Northern Europe for test and research purposes, although they are common in the hot zone.

The above system is described e.g. in simultaneously filed Finnish Patent Application 954,949. The document also discloses a system in which investment costs can be essentially reduced and reliability of the plant can be improved as compared with the prior art. These advantages are achieved by cutting the peak load by evaporative cooling arranged in the air-conditioning units of a building and by levelling daily variation in consumption by providing the system with a tank from which power that has been loaded at night or some other time when there is no consumption or consumption is minimal is unloaded in day-time during a consumption peak.

The evaporative cooling and especially the tank naturally cause additional costs, which, however, are much smaller than the savings achieved by making the absorption heat pump, spray tower, pipe system, etc. smaller. They do, however, impair the competitiveness of the system as compared with compressor cooling.

In the system described in the above-mentioned Finnish patent application, the use of electricity is compensated for in the summer by the use of waste heat, which is otherwise almost totally wasted in the summer, and the system levels the use of waste heat over a 24-hour period. This makes production of energy more economic. Investments on the district heating network and production of heat, however, are determined by the amount of heat consumed in the winter.

The investments on the production and distribution of heat are determined by peak consumption, which is primarily dependent on the outdoor temperature. The design outdoor temperature, however, prevails relatively seldom. The design temperature of Helsinki, for example, is -26°C. This temperature, however, prevails on the average during fewer than 18 hours per year. A temperature of or below 20°C, in turn, prevails on the average during about 88 hours, whereas the entire heating period is about 5000 to 6500 hours in length, depending on the building. The situation is thus very similar to the summer. The temperature duration curve comprises a high peak value of short duration.

With regard to production and distribution of heat, the situation is worsened by variation in the consumption in a 24-hour period. About half of the buildings are not used except during the working hours. In such buildings, ventilation is usually stopped or adjusted to be minimal during the night and the weekends. The proportion of ventilation in the heat consumption of an average building is about half, but in these buildings the heat consumption in a 24-hour period varies continuously between 50% and 100%. This further increases the difference between the average and peak consumption of heat. The indoor temperature of a building like this is also often lowered when the building is not in use, which worsens the situation even further.

In recent years, it has been noticed that the energy saving measures taken in buildings have further worsened the situation. The yearly consumption of heat has dropped drastically during the last 20 years. The peak consumption, instead, has not dropped nearly as much. There are several reasons for this. Maybe the most important reason is that heat cannot be recovered from exhaust air at full capacity during the peak load because of the risk of freezing. Another major reason is the lowering of the indoor temperature when the buildings are not in use.

With regard to production and distribution of heat, the situation is difficult. A heat power plant and distribution system should be designed in accordance with peak consumption, but their average degree of use would then be about 25% to 35%. In addition, the situation is growing worse and worse.

In practice, the power plant and distribution system, which are expensive to build, are not designed in view of the peak load but of a much smaller output. The peak output of heat consumption is generated in heating stations used during maximum heating demand, the heating stations being arranged in different parts of the distribution system and their proportion of the overall heating power optionally being large. In Helsinki, for example, the degree of use of the maximum heating stations is low, at best only a few dozen hours a year. The unit price of heat generated in them is very high because of high investment costs.

The system provided by the invention makes it possible to level the variation in the heat consumption in a 24-hour period such that the buildings connected to the system do not use any heat from the district heating network or may in some cases even be able to supply power to the district heating network when consumption in the other buildings is great. Correspondingly, they take all the heating energy they need from the network when consumption in the other buildings is small. The invention thus replaces maximum heating stations and reduces the need of investments. The overall efficiency of the production of energy will rise as a larger proportion of the energy can be generated in heating plants rather than in maximum heating stations.

The invention utilizes an apparatus used for generating chill, the apparatus being described in simultaneously filed Finnish Patent Application 954,949. Some of the apparatuses used for generating chill can thus also be used in the winter, whereby the number of hours of use can be multiplied. If the investment costs are divided between the production of heat and the production of chill on the basis of the hours of use, the amount of energy generated, or some other relevant factor, the overall costs of the production of heat and especially of chill can be significantly reduced and the production of chill is rendered more competitive with compressor cooling.

The invention is based on the simple realization that a cold water tank contained in the apparatus according to Finnish Patent Application 954,949 can be used as a hot water tank in the winter, whereby no cooling water is needed. The method provided by the invention is characterized in that the liquid used for the transfer of energy is stored in one and the same tank arranged in the absorption aggregate or another aggregate producing cooling power during both cooling and heating when the cooling or heating demand is small, and that it is drawn from the tank when the cooling or heating demand is great. The arrangement according to the invention, in turn, is characterized in that the liquid used for the transfer of energy is arranged to be stored in one and the same tank arranged in an absorption aggregate when the cooling or heating demand is small or another aggregate producing cooling power during both cooling and heating, and that it is arranged to be drawn from the tank when the heating or cooling demand is great.

The tank can thus be filled with hot water at night when the load in the district heating network is light, and all the heat needed by the building can be drawn from the tank in day-time when the load in the network is heavy. If 40% of the buildings are provided with such apparatuses, the daily variation in the load can be levelled completely. In a modern office block, for example, the maximum need of cooling power is about 60 W/building-m². In the system described in Finnish Patent Application 954,949, at least 30% of the cooling energy demand, i.e. 18 W/building-m² on the average, is covered by the tank. All heating energy is covered by the tank. Let the number of hours of maximum output be 6 in cooling and 11 in heating. The characteristics describing the amount of energy to be stored are then 880 Wh/building-m² in heating and 108 Wh/building-m² in cooling. The characteristic describing the volume of the tank is obtained by dividing the characteristic describing the amount of energy to be stored by the temperature difference of the supply water and the exhaust water, the difference in conventional plants being 12 - 6 = 6°C in cooling and 70 - 40 = 30°C in heating. The characteristic in cooling is 18 Wh/m²°C and in heating 29.3 Wh/m²°C. A conventional plant can thus cover only about 60% of the heating energy demand if it is designed on the basis of the cooling energy demand. It improves the situation essentially to realize that it is possible to heat the water to be stored to an essentially higher temperature with district heating water having a supply temperature of 115°C in a design situation, if a heat exchanger between the district heating network and the network of the building is designed in an unconventional manner, e.g. such that the water to be stored has a temperature of 100°C. The temperature of the exhaust water in the circulation water network of a building can be adjusted to be suitable e.g. by shunt connections known per se, for example such that a suitable amount of hot water from the tank is mixed with the circulation water by a two- or three-way valve. The difference in temperature is then 100 - 40 = 60°C and the characteristic describing the volume of the tank during heating is 14.7 Wh/m²°C. For heating, only about 80% of the tank capacity designed in view of cooling would be needed. The energy reserve can be utilized if district heating water instead of circulation water of the building is stored and if heat is transferred from the district heating water to the circulation water circuit of the building by a heat exchanger. If the heat exchanger is used, for example, for cutting the Monday morning peak by 25% for a period of three hours, the energy reserve can be readily seen to suffice for about three buildings that have the same consumption as the building for which the tank is designed. The method, however, has the drawback that the tank will have to be designed such that it meets the requirements set for the pressure, temperature, etc. of a district heating network. In addition, the cooling water and district heating water of the building will mix when cooling is started/stopped. It is even more preferable to provide the air-conditioning units of a building with a heat transfer circuit according Finnish Published Specification 92,867 and to connect the heat transfer system of the heating and air-conditioning systems of the building in series in the way presented in Finnish Published Specification 94,173. The temperature differences in the circulation water circuits of the building increase for the reasons presented in the publication in such a way that the temperature difference is 100 - 15 = 85°C in heating and 20 - 6 = 14°C in cooling. The characteristics describing the volume of the tank are then 8.0 Wh/m²°C in heating and 7.8 Wh/m²°C in cooling, i.e. less than half of the volume of a tank designed by conventional heating, plumbing and air-conditioning techniques.

In the following, the invention will be described in greater detail with reference to the preferred embodiments illustrated in the drawing, in which
fig. 1 shows a general diagram of a first embodiment of an arrangement according to the invention,
fig. 2 shows a general diagram of a second embodiment of an arrangement according to the invention, and
fig. 3 shows a general diagram of a third embodiment of an arrangement according to the invention.

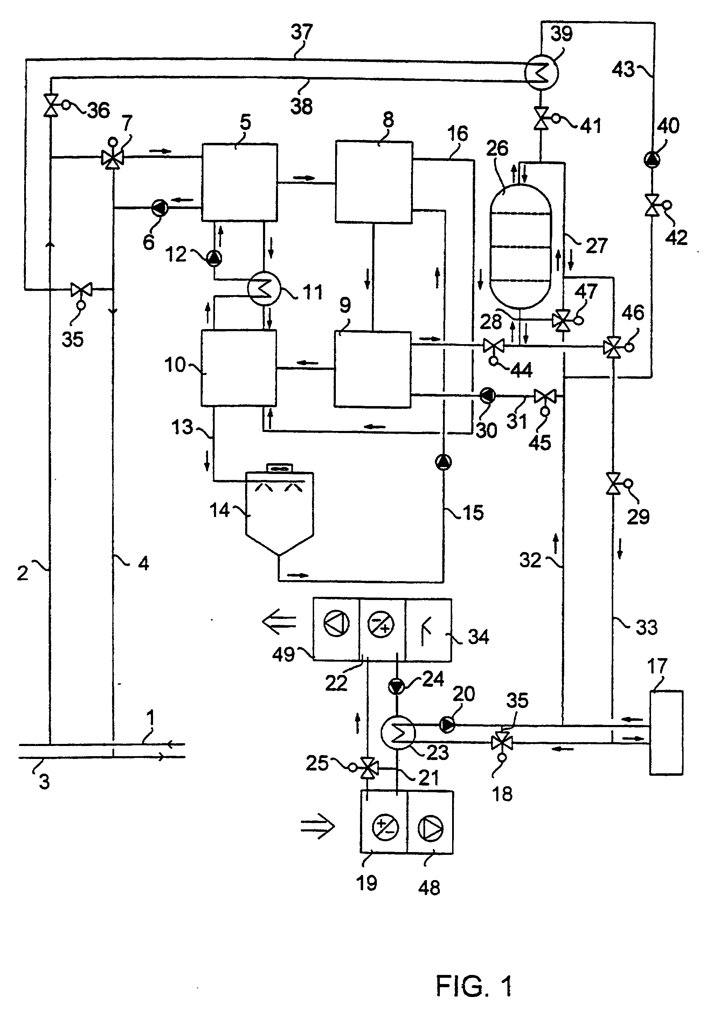

Figs. 1 to 3 show three different embodiments of a system according to the invention. With regard to a cooling step, the above embodiments operate in the same way as the system described in the above-mentioned, simultaneously filed Finnish Patent Application 954,949, and so the operation will not be described here but reference is made to the application mentioned.

In fig. 1, a district heating network with service pipes is indicated by reference numbers 1-4, an absorption heat pump with auxiliary equipment and pipe systems is indicated by numbers 5-16. A heating system is generally indicated by reference number 17, and a heat transfer circuit of an air-conditioning unit by numbers 18-25. A tank with service pipes is indicated by 26-28, a pipe system needed for cooling is indicated by 29-33, and a moistening part for evaporative cooling by number 34. The auxiliary equipment needed for heating are indicated by reference numbers 35, 36, etc.

As stated above, the system described in fig. 1 operates during cooling in the same way as the system described in simultaneously filed Finnish Patent Application 954,949. During heating, the system of fig. 1 operates, in principle, as described in the following. The absorption aggregate and auxiliary equipment 5-16 are stopped and disconnected from the circulation water systems by valves 7, 44 and 45. In day-time and even otherwise during peak load, when no heating power is drawn from the district heating network 1-4, valves 35, 36, 41 and 42 are closed and pump 40 is stopped, i.e. the heating system of the building is disconnected from the district heating network. The heating power is drawn from a tank 26 through a pipe 27. A three-way valve 46 is in a position where the flow paths to pipes 27 and 33 are open and the flow path to pipe 28 is closed. The air-conditioning unit 18-25 is in operation, and its pump 20 draws an amount of hot water needed by the heat exchanger 25 of the air-conditioning unit from pipe 33, the amount being regulated by three-way valve 18. Pump 20 returns the cooled water through pipes 32 and 28 and three-way valve 47 to the tank. Correspondingly, the one or more pumps contained in the heating system 17 of the building take hot water from pipe 33 and return the cooled water through pipe 32 to tank 26. Three-way valve 47 is in a position where the flow path to pipe 27 is closed and the flow paths to pipes 28 and 32 are open.

The above embodiment is to be understood as an example of how the principle of the invention can be implemented. For the sake of clarity, fig. 1 shows only one air-conditioning unit 18-25 and one heating system 17, although in practice there are usually more than one of them and even in several buildings. Of the connections within a building, we have presented, by way of an example, one possible connection of one type of air-conditioning unit. It is more common, for example, that there is no heat exchanger 23 but hot water is conducted directly to a heating radiator of an air-conditioning unit. The heating system is not shown in detail, since all different heating methods, such as radiator heating, floor heating, etc. are possible. It is also possible that a separate heating system using hot water does not exist, for example, in air heated buildings. All these solutions in which conventional technology is applied are naturally encompassed by the invention.

Fig. 1 shows only one tank. Naturally, there may be two or more tanks that are preferably connected in series, and parallel connections are also possible. The pipes can be connected in various ways utilizing the known art.

When the load in a district heating network 1-4 is reduced usually because air-conditioning units 18-25 are stopped in a large number of buildings, one starts to load tank 26. The stopping of the air-conditioning units does not mean that e.g. the unit of fig. 1 would be stopped altogether. Fans 48 and 49 are stopped, and supply air slides, which are not shown in fig. 1, are closed. Pumps 24 and 20 are usually allowed to continue to rotate, often at a reduced rate, and valve 18 stops the drawing of hot water from pipe 33 almost totally.

A heat exchanger 39 is connected to tank 26 by opening valves 42 and 41 and to the district heating network 1-4 by opening valves 35 and 36, and pump 40 is started. District heating water will flow from pipe 2 through valve 36 and pipe 38 to the heat exchanger 39, where it cools and then returns though pipe 37 and valve 35 to return pipe 4. The flow of water is adjusted to be suitable by valve 35 or 36. The heat exchanger 39 can also be provided with a pump of its own or with a three- or two-way valve in the same way as in air-conditioning unit 18-25.

Pump 40 sucks chilled water through valve 42 from pipe 33, to which chilled water flows both from tank 26 through pipe 28 and from the heating system 17 of the building, which is constantly in operation. From pump 40 the water flows through pipe 43 to heat exchanger 39, where it is heated and from where it then flows partly through valve 41 to tank 26 and partly through pipe 27, valve 46 and pipe 33 to the heating system.

Since the heat exchanger 39 will have to be able to heat the building and load tank 26 simultaneously, it has to have sufficient output. It is usually sufficient to design a water circuit 39-42 of a tank in view of a water flow that is equivalent to the air-conditioning water flow + twice the heating water flow in a design situation.

The arrangement of fig. 1 is one way of implementing the invention. For example, tank 26 can be provided with two sets of connections and the heat transfer circuit 39-43 can be connected directly to the tank and not to pipes 27 and 28. If, for example, no heating system 17 exists and the building is heated with air-conditioning units 18-25, fans 48 and 49 are not stopped but one shifts to using return air instead, i.e. instead of outdoor air, one heats exhaust air of the building, the exhaust air being drawn from the building by means of fan 49 and returned by fan 48. In practice, this is effected by closing the outdoor air slides and opening the return air slide, which are not shown in fig. 1. Valve 18 regulates the flow of water drawn from pipe 33 such that it is in line with the reduced output.

As can be seen, the basic idea of the invention can be applied as many kinds of arrangements in connection with various air-conditioning and heating systems. All these applications of the prior art are naturally encompassed by the invention.

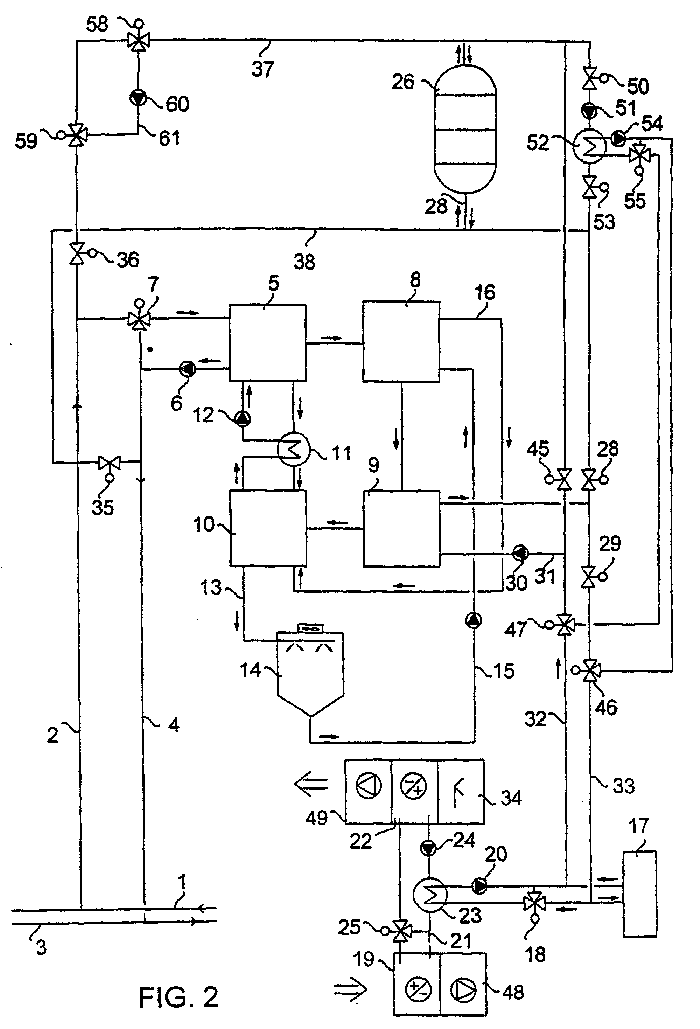

Fig. 2 shows a second embodiment of the invention. In the embodiment, tank 26 is directly connected to the district heating network 1-4 with pipes and valves 35-38. For heating, there is a heat transfer circuit 50-53, in which the water circulating in a heat distribution circuit 54-57 of the building is heated. The heat transfer circuit 50-53 and heat distribution circuit 54-57 are in operation always when heat is needed. The tank is loaded simply by opening valves 35 and 36. For the sake of clarity, fig. 2 does not show the regulation of the heat transfer circuit 50-53. In other respects the reference numbers and operation are identical to those in fig. 1.

The system has the drawback that when the cooling period starts, valves 36 and 35 are closed, valves 28 and 45 are opened, and heat distribution circuit 54-57 is disconnected by valves 47 and 46, whereby some district heating water remains in tank 26 and the water starts to circulate in the circulation water circuit of the absorption aggregate. On the other hand, power can be supplied to the district heating network 1-4 from the system by opening a bypass line 61 to the district heating network by valves 58 and 59. Hot water can be supplied to the network from tank 26 by a pump 60.

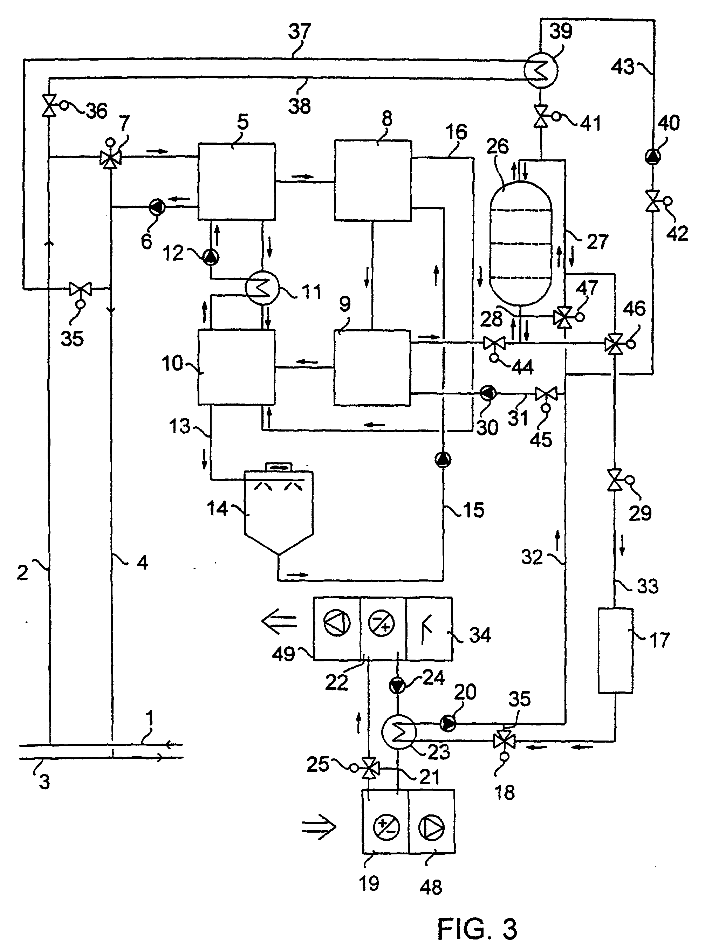

Fig. 3 shows a particularly preferred embodiment of the invention, in which the water supplied from tank 26 through pipes 27 and 33 first passes through the heating system 17 of the building, and then the return water is conducted through pipe 62 to air-conditioning units 18-25, from which it returns to tank 26 through pipe 32. The heat transfer circuit 18-25 of the air-conditioning unit is as described in Finnish Published Specification 92,867. A greater difference in temperature is then achieved than by the embodiments presented in figs. 1 and 2, and tank 26 can be reduced even to half of its present size.

Cooling and heating power may also be needed simultaneously in a building. This is easy to arrange e.g. in the arrangement of fig. 3 as follows: for the heating system 17, a bypass line is arranged to return pipe 32, an air-conditioning unit 18-25 is disconnected from heating pipes 32 and 33 e.g. by a check valve, and pipes are arranged to lead from air-conditioning units 18-25 to an absorption aggregate 5-16, which is then started. Tank 26 and heat transfer circuit 39-43 then continue to serve the heating in those buildings or parts of a building in which heating is needed, and absorption aggregate 5-16 continues to serve air-conditioning units 18-25, which attend to cooling where cooling is needed.

Correspondingly, for example the heat transfer circuit 50-57 of fig. 2 can be disconnected from the system and a bypass line can be arranged directly to the district-heating system 1-4. Tank 26 and absorption aggregate 5-16 then continue to serve cooling.

The above connections are discussed in greater detail e.g. in Finnish Patent Application 940,343, so they will not be discussed more broadly here.

In some cases, an absorption aggregate will have to be used periodically e.g. in the spring or autumn when the cooling load of a building is light. Preferably, the problem is solved by using the aggregate only at night and storing chill in a tank 26. In day-time, the absorption aggregate is idle and cooling is effected by water stored in the tank. Air-conditioning units 18-25 and 35-41 need then not be used, either, since the water stored has a temperature of 20°C.

It is also possible to provide an auxiliary tank for the 20°C return water of the cooling systems of the building produced between operating periods and/or for the 50 to 55°C water produced during an operating period, or for both. They are connected with pipe and control arrangements known per se, and the arrangements can be varied in many ways depending on the selected strategy of use. All the above solutions known per se are encompassed by the invention.

The above embodiments are not to be understood as limiting the invention, but the invention can be modified quite freely within the scope of the claims. It is thus obvious that the arrangement of the invention or details of the arrangement need not be exactly as described in the figures, but that other kinds of solutions are also possible. In the examples illustrated by the figures, cooling power is generated by an absorption aggregate, since the advantages are then greatest. Naturally, however, other apparatuses used for generating cooling power can also be used in the invention.

## Claims

1. A method for producing cooling and heating power for one or more buildings and for distributing the power to the buildings by means of liquid circulating in a pipe system, the cooling and heating power being produced by hot district heating water and by an absorption aggregate (5, 8, 9, 10) or another aggregate producing cooling power that obtains energy from the district heating water, **characterized in that** the liquid used for the transfer of energy is stored in one and the same tank (26) arranged in the absorption aggregate when the cooling or heating demand is small (5, 8, 9, 10) or the other aggregate producing cooling power during both cooling and heating, and that it is drawn from the tank (26) when the cooling or heating demand is great.

2. A method according to claim 1, **characterized in that** the temperature of the energy transferring liquid in the tank (26) is adjusted to be higher during heating and/or lower during cooling than the temperature required for the liquid by energy consuming apparatuses.

3. A method according to claim 1 or 2, **characterized in that** the temperature of the liquid coming from the tank (26) is adjusted to the correct level by mixing the liquid with the liquid returning from the energy consuming apparatuses.

4. A method according to any one of preceding claims 1 to 3, **characterized in that** the liquid stored in the tank (26) for heating is district heating water.

5. A method according to any one of preceding' claims 1 to 4, **characterized in that** the liquid that has flowed through the heating system of the building is conducted in a second step through the air-conditioning system to achieve a greater change of temperature.

6. A method according to any one of preceding claims 1 to 5, **characterized in that** the liquid stored in the tank (26) or district heating water heated with the liquid is supplied back to the district heating network when the load in the district heating network is heavy.

7. A method according to any one of preceding claims 1 to 6, **characterized in that** the cooling power needed by the buildings is drawn in day-time from the tank (26) in which cold liquid is stored at night.

8. An arrangement for producing cooling and heating power for one or more buildings and for distributing the power to the buildings by means of liquid circulating in a pipe system, the cooling and heating power being produced by hot district heating water and by an absorption aggregate (5, 8, 9, 10) or another aggregate producing cooling power that obtains energy from the district heating water, **characterized in that** the liquid used for the transfer of energy is arranged to be stored in one and the same tank (26) arranged in an absorption aggregate (5, 8, 9, 10) or the other aggregate producing cooling power during both cooling and heating when the cooling or heating demand is small, and that it is arranged to be drawn from the tank (26) when the heating or cooling demand is great.

9. An arrangement according to claim 8, **characterized in that** the temperature of the energy transferring liquid in the tank (26) is arranged to be higher during heating and/or lower during cooling than the temperature required for the liquid by energy consuming apparatuses.

10. An arrangement according to claim 8 or 9, **characterized in that** the temperature of the liquid coming from the tank (26) is adjusted to the correct level by mixing the liquid with the liquid returning from the energy consuming apparatuses.

11. An arrangement according to any one of preceding claims 8 to 10, **characterized in that** the liquid stored in the tank (26) for heating is district heating water.

12. An arrangement according to any one of preceding claims 8 to 11, **characterized in that** the liquid that has flowed through the heating system of the building is arranged to pass in a second step through the air-conditioning system to achieve a greater change of temperature.

13. An arrangement according to any one of preceding claims 8 to 12, **characterized in that** the liquid stored in the tank (26) or district heating water heated with the liquid is supplied back to the district heating network when the load in the district heating network is heavy.

14. An arrangement according to any one of preceding claims 8 to 13, **characterized in that** cold water is arranged to be stored in the tank (26) at night, and that the tank (26) is arranged to supply the stored liquid in day-time to provide buildings with power.

## Patentansprüche

1. Verfahren zur Erzeugung von Kälteenergie und Wärmeenergie für ein oder mehrere Gebäude und zum Verteilen der Energie zu den Gebäuden mit Hilfe von Flüssigkeit, die in einem Leitungssystem zirkuliert, wobei die Kälteenergie und die Wärmeenergie erzeugt werden durch heißes Fernwärmewasser und durch ein Absorptionsaggregat (5, 8, 9, 10) oder ein anderes Aggregat, das Kälteenergie erzeugt, das Energie aus dem Fernwärmewasser erhält,
**dadurch gekennzeichnet, dass**
die Flüssigkeit, die zur Energieübertragung verwendet wird, in ein und demselben Behälter (26) gespeichert wird, angeordnet in dem Absorptionsaggregat, wenn der Kälte- oder Wärmebedarf klein ist, (5, 8, 9, 10) oder dem anderen Kälteenergie erzeugenden Aggregat sowohl während des Kühlens als auch während des Heizens und dass sie aus dem Behälter (26) entnommen wird, wenn der Kälte- oder Wärmebedarf groß ist.

2. Verfahren nach Anspruch 1,
**dadurch gekennzeichnet, dass**
die Temperatur der energie-übertagenden Flüssigkeit in den Behälter (26) reguliert wird, höher zu sein, während des Heizens und/oder niedriger während des Kühlens als die Temperatur, die von energie-verbrauchenden Apparaten für die Flüssigkeit erfordert wird.

3. Verfahren nach Anspruch 1 oder 2,
**dadurch gekennzeichnet, dass**
die Temperatur der Flüssigkeit, die von dem Behälter (26) kommt, reguliert wird auf den korrekten Pegel durch Mischen der Flüssigkeit mit der Flüssigkeit, die von den energie verbrauchenden Apparaten zurückkommt.

4. Verfahren nach einem der vorangegangenen Ansprüche 1 bis 3, **dadurch gekennzeichnet, dass** die Flüssigkeit, die in dem Behälter (26) zum Heizen gespeichert wird, Fernwärmewasser ist.

5. Verfahren nach einem der vorangegangenen Ansprüche 1 bis 4, **dadurch gekennzeichnet, dass** die Flüssigkeit, die durch das Heizsystem des Gebäudes geflossen ist, in einem zweiten Schritt durch das Klimatisierungssystem geleitet wird, um eine größere Temperaturveränderung zu erzielen.

6. Verfahren nach einem der vorangegangenen Ansprüche 1 bis 5, **dadurch gekennzeichnet, dass** die Flüssigkeit, die in dem Behälter (26) gespeichert ist, oder Fernwärmewasser, erwärmt durch die Flüssigkeit, zurückgeliefert wird in das Fernwärmenetzwerk, wenn die Last des Fernwärmenetzwerks hoch ist.

7. Verfahren nach einem der vorangegangenen Ansprüche 1 bis 6, **dadurch gekennzeichnet, dass** die Kälteenergie, die von den Gebäuden benötigt wird, tagsüber von dem Behälter (26) bezogen wird, in dem kalte Flüssigkeit während der Nacht gespeichert wird.

8. Vorrichtung zur Erzeugung von Kälteenergie und Wärmeenergie für ein oder mehrere Gebäude und zum Verteilen der Energie zu den Gebäuden mit Hilfe von Flüssigkeit, die in einem Leitungssystem zirkuliert, wobei die Kälteenergie und Wärmeenergie erzeugt wird durch heißes Fernwärmewasser und durch ein Absorptionsaggregat (5, 8, 9, 10) oder ein anderes Aggregat, das Kälteenergie erzeugt, das Energie aus dem Fernwärmewasser erhält,
**dadurch gekennzeichnet, dass**
die Flüssigkeit, die zur Energieübertragung verwendet wird, ausgelegt ist, in ein und demselben Behälter (26) gespeichert zu werden, angeordnet in dem Absorptionsaggregat (5, 8, 9, 10) oder dem anderen Kälte erzeugenden Aggregat sowohl während des Kühlens als auch während des Heizens wenn der Kälte- oder Wärmebedarf klein ist und dass sie ausgelegt ist, um aus dem Behälter (26) entnommen zu werden, wenn der Kälte- oder Wärmebedarf groß ist.

9. Vorrichtung nach Anspruch 8,
**dadurch gekennzeichnet, dass**
die Temperatur der energie übertagenden Flüssigkeit in den Behälter (26) ausgelegt ist, höher zu sein, während des Heizens und/oder niedriger während des Kühlens als die Temperatur, die von energie-verbrauchenden Apparaten für die Flüssigkeit erfordert wird.

10. Vorrichtung nach Anspruch 8 oder 9,
**dadurch gekennzeichnet, dass**
die Temperatur der Flüssigkeit, die von dem Behälter (26) kommt, reguliert wird auf den korrekten Pegel durch Mischen der Flüssigkeit mit der Flüssigkeit, die von den energie verbrauchenden Apparaten zurückkommt.

11. Vorrichtung nach einem der vorangegangenen Ansprüche 8 bis 10, **dadurch gekennzeichnet, dass** die Flüssigkeit, die in dem Behälter (26) zum Heizen gespeichert wird, Fernwärmewasser ist.

12. Vorrichtung nach einem der vorangegangenen Ansprüche 8 bis 11, **dadurch gekennzeichnet, dass** die Flüssigkeit, die durch das Heizsystem des Gebäudes geflossen ist, ausgelegt ist, um in einem zweiten Schritt durch das Klimatisierungssystem zu laufen, um eine größere Temperaturveränderung zu erzielen.

13. Vorrichtung nach einem der vorangegangenen Ansprüche 8 bis 12, **dadurch gekennzeichnet, dass** die Flüssigkeit, die in dem Behälter (26) gespeichert ist, oder Fernwärmewasser, erwärmt durch die Flüssigkeit, zurückgeliefert wird in das Fernwärmenetzwerk, wenn die Last des Fernwärmenetzwerks hoch ist.

14. Vorrichtung nach einem der vorangegangenen Ansprüche 8 bis 13, **dadurch gekennzeichnet, dass** kaltes Wasser ausgelegt ist,um in dem Behälter (26) während der Nacht gespeichert zu werden und dass der Behälter (26) ausgelegt ist, um die gespeicherte Flüssigkeit tagsüber zu liefern, um Gebäude mit Energiezu versorgen.

## Revendications

1. Procédé de production d'énergie de refroidissement et de chauffage destiné à un ou plusieurs bâtiments, et de distribution d'énergie vers les bâtiments à l'aide d'un liquide qui circule dans un circuit de conduites, l'énergie de refroidissement et de chauffage étant produite par de l'eau chaude de chauffage urbain et par un ensemble d'absorption (5, 8, 9, 10) ou un autre ensemble produisant de l'énergie de refroidissement et qui obtient de l'énergie de l'eau de chauffage urbain, **caractérisé en ce que** le liquide utilisé pour le transfert d'énergie est accumulé dans un seul et même réservoir (26) disposé dans l'ensemble d'absorption lorsque la demande de refroidissement ou de chauffage est faible (5, 8, 9, 10) ou l'autre ensemble produisant de l'énergie de refroidissement, à la fois pendant le refroidissement et le chauffage, et **en ce qu'**il est extrait du réservoir (26) lorsque la demande de refroidissement ou de chauffage est élevée.

2. Procédé selon la revendication 1, **caractérisé en ce que** la température du liquide de transfert d'énergie dans le réservoir (26) est ajustée afin qu'elle soit plus élevée pendant le chauffage et/ou plus faible pendant le refroidissement que la température demandée au liquide par les appareils consommateurs d'énergie.

3. Procédé selon la revendication 1 ou 2, **caractérisé en ce que** la température du liquide provenant du réservoir (26) est ajustée au niveau convenable par mélange du liquide avec le liquide revenant des appareils consommateurs d'énergie.

4. Procédé selon l'une quelconque des revendications précédentes 1 à 3, **caractérisé en ce que** le liquide accumulé dans le réservoir (26) pour le chauffage est de l'eau de chauffage urbain.

5. Procédé selon l'une quelconque des revendications précédentes 1 à 4, **caractérisé en ce que** le liquide qui a circulé dans le circuit de chauffage du bâtiment est conduit à une seconde étape par un système de conditionnement d'air destiné à donner un plus grand changement de température.

6. Procédé selon l'une quelconque des revendications précédentes 1 à 5, **caractérisé en ce que** le liquide accumulé dans le réservoir (26) ou l'eau de chauffage urbain chauffée avec le liquide est renvoyé au réseau de chauffage urbain lorsque la charge du réseau de chauffage urbain est élevée.

7. Procédé selon l'une quelconque des revendications 1 à 6, **caractérisé en ce que** l'énergie de refroidissement nécessaire aux bâtiments est extraite de jour du réservoir (26) dans lequel un liquide froid est accumulé la nuit.

8. Arrangement de production d'énergie de refroidissement et de chauffage destiné à un ou plusieurs bâtiments et de distribution d'énergie aux bâtiments par un liquide qui circule dans un circuit de conduites, l'énergie de refroidissement et de chauffage étant produite par de l'eau de chauffage urbain qui est chaude et par un ensemble d'absorption (5, 8, 9, 10) ou un autre ensemble produisant de l'énergie de refroidissement, qui obtient l'énergie de l'eau de chauffage urbain, **caractérisé en ce que** le liquide utilisé pour le transfert d'énergie est destiné à être accumulé dans un seul et même réservoir (26) disposé dans un ensemble d'absorption (5, 8, 9, 10) ou un autre ensemble produisant de l'énergie de refroidissement à la fois pendant le refroidissement et le chauffage lorsque la demande de refroidissement ou de chauffage est faible, et **en ce qu'**il est destiné à être retiré du réservoir (26) lorsque la demande de chauffage ou de refroidissement est élevée.

9. Arrangement selon la revendication 8, **caractérisé en ce que** la température du liquide de transfert d'énergie dans le réservoir (26) est destiné à être plus grande lors du chauffage et/ou plus faible lors du refroidissement que la température demandée au liquide par les appareils consommateurs d'énergie.

10. Arrangement selon la revendication 8 ou 9, **caractérisé en ce que** la température du liquide provenant du réservoir (26) est ajustée au niveau convenable par mélange du liquide au liquide revenant des appareils consommateurs d'énergie.

11. Arrangement selon l'une quelconque des revendications 8 à 10, **caractérisé en ce que** le liquide accumulé dans le réservoir (26) pour le chauffage est de l'eau de chauffage urbain.

12. Arrangement selon l'une quelconque des revendications précédentes 8 à 11, **caractérisé en ce que** le liquide qui a circulé dans le circuit de chauffage du bâtiment est destiné à circuler dans une seconde étape dans le système de conditionnement d'air pour assurer un plus grand changement de température.

13. Arrangement selon l'une quelconque des revendications précédentes 8 à 12, **caractérisé en ce que** le liquide accumulé dans le réservoir (26) ou l'eau de chauffage urbain chauffée par le liquide est renvoyé au réseau de chauffage urbain lorsque la charge du réseau de chauffage urbain est élevée.

14. Arrangement selon l'une quelconque des revendications précédentes 8 à 13, **caractérisé en ce que** de l'eau froide est destinée à être accumulée dans le réservoir (26) la nuit, et le réservoir (26) est destiné à transmettre le liquide accumulé le jour pour transmettre de l'énergie aux bâtiments.
